# EUROPÄISCHE PATENTSCHRIFT

(11) **EP 2 565 081 B1**
(45) Veröffentlichungstag und Bekanntmachung des Hinweises auf die Patenterteilung: **10.05.2017**
(21) Anmeldenummer: 12005229.5
(22) Anmeldetag: 17.07.2012
(51) Int. Cl.: B60Q 3/64, B60Q 3/208

(54) **Umlaufende Beleuchtungsvorrichtung für eine Fahrzeug-Komponente**
Circular lighting device for a vehicle component
Dispositif d'éclairage mobile pour un composant de véhicule

(30) Priorität: 02.09.2011 DE 102011112320
(43) Veröffentlichungstag der Anmeldung: 06.03.2013
(73) Patentinhaber: AUDI AG, 85045 Ingolstadt (DE)
(72) Erfinder: Pfeil, Marcus, 90537 Feucht (DE); Justus-Bischler, Elena, 84137 Vilsbiburg (DE)
(74) Vertreter: Thielmann, Frank

(56) Entgegenhaltungen:
- EP-A1- 2 287 042
- EP-A2- 1 052 145
- WO-A1-2007/047304
- DE-A1-102009 011 708
- JP-A- 2010 120 604
- US-A1- 2003 063 888
- US-A1- 2005 219 853

## Beschreibung

Die Erfindung betrifft eine umlaufende Beleuchtungsvorrichtung insbesondere für Fahrzeug-Komponenten und Fahrzeuge mit einer solchen umlaufenden Beleuchtungsvorrichtung.

Gegenwärtig sind umlaufende Beleuchtungen bei Gegenständen wie beispielsweise bei Lautsprechern, Tasten, Cup-Holdern, etc. bekannt. Dabei handelt es sich im Allgemeinen um einen ringförmigen Lichtleiter, in den meistens zwei LEDs eingekoppelt werden. Der Lichtleiter wird dazu in der Nähe des zu beleuchtenden oder hervorzuhebenden Bauteils anhand von Verrastungen starr fixiert. Mittels dieser Vorgehensweise gelingt es, einen Lichtleiter um eine Fläche der Größe von ca. 200 mm mal 150 mm zu führen.

Im Fahrzeuginnenraum herrschen oft Temperaturen zwischen -40°C und +80 C. In Folge dieser starken Temperaturschwankungen neigen auch die eingebauten Bauteile sowie die sie umlaufenden Beleuchtungen zu unterschiedlichen Ausdehnungen. Dabei treten aufgrund der starren Befestigung der Beleuchtungen an den von ihnen umlaufenden Bauteilen Temperaturspannungen auf, die ursächlich für Zerstörungen oder Defekte der zusammenwirkenden Gegenstände sind. Solche Spannungen entstehen auch in den lichtleitenden Elementen aufgrund unterschiedlicher Wärmeausdehnung der zusammengebauten Materialien. Bei Beleuchtungen, die großflächige Bauteile umlaufen, beispielsweise einem Schiebe-/Großdach, ist eine Fläche von ca. 1500 mm mal 1000 mm zu umlaufen. Die bei derartigen Abmessungen auftretenden Wärmeausdehnungen können im Rahmen der Bauteiltoleranzen nicht mehr ohne zusätzliche Maßnahmen aufgenommen werden. Unterschiedliche Baumaterialien weisen unterschiedliche Wärmeausdehnungskoeffizienten auf, die bei hohen oder sehr niedrigen Temperaturen zu starken relativen Ausdehnungsunterschieden führen und somit zum mechanischen Versagen der Bauteile - z.B. Bruch eines Lichtleiters - was wiederum zu Funktionsstörungen der Bauteile oder aber zu deren vollständiger Zerstörung führt. Demnach versagen konventionelle Bauformen bzw. Bauverfahren bei der Herstellung und Nutzung von umlaufenden Beleuchtungen um großflächige Fahrzeug-Komponenten.

Aus der Druckschrift US 2005/219853 A1 ist eine Fahrzeuginnenraumbeleuchtung bekannt, die sich eines Lichtwellenleiters bedient, der sich U-förmig am Rand und innerhalb eines im Wesentlichen rechteckigen Beleuchtungsgehäuses erstreckt. Der Lichtleiter wird in einer Umfassung - Lichtleiterkörperhaltenut - geführt und ist an seinen beiden Enden mittels eines Vorsprungs gehalten. Um eine Fixierung des Lichtleiters in seiner ihn führenden Umfassung zu gewährleisten, weist der gekrümmte Abschnitt der U-förmigen Umfassung eine Einraststufe auf, in der der Lichtleiter zusätzlich festgehalten wird. Aufgrund der Einspannungen an den Enden sowie in dem Krümmungsbereich des Lichtleiters ist eine relative Bewegung des Lichtleiters in Bezug auf seine ihn führende Umfassung nicht möglich, was wiederum zu temperaturbedingten Spannungen bei unterschiedlicher temperaturbedingter Ausdehnung des Lichtleiters bezüglich seiner Umfassung führt. Demnach eignet sich diese Fahrzeuginnenraumbeleuchtung nur für kleinflächige Bauteile, die von dem U-förmigen Lichtleiter umlaufen werden können.

Des Weiteren ist aus der Druckschrift EP 2 287 042 A1 eine Fahrzeuginnenraumbeleuchtung bekannt, die für ein Glasdach oder Schiebedach eines Personenkraftwagens vorgesehen ist. Die Beleuchtungsvorrichtung umfasst Profilsegmente, von denen jedes auf seiner Innenseite einen zugehörigen bandförmigen Leuchtkörper zur Ausleuchtung des Fahrzeuginnenraums trägt. Die Profilsegmente bilden dabei eine Führungseinrichtung für die darin enthaltenen Leuchtkörper. Die Leuchtkörper können ein Lichtleiter und/oder ein elektrolumineszentes Lichtband und/oder ein mit Licht emittierenden Dioden versehenes Band sein, die/das biegbar an Krümmungen der Führungseinrichtung angepasst werden können/kann. Zur Halterung der Leuchtkörper in der Beleuchtungseinrichtung werden diese in den sie aufnehmenden Profilsegmenten bzw. Beleuchtungssegmenten zumindest teilweise umschlossen oder in diese eingebettet und dadurch ortsfest fixiert oder eingeklemmt. Aufgrund der festen Verbindung zwischen den Leuchtkörpern und der sie zumindest teilweise umschließenden und fest ein-spannenden Führungseinrichtung bzw. Profilsegmente sind keine thermisch bedingten mechanischen Spannungen abbaubar bzw. durch eine relative Verschiebung der Führungseinrichtung und Leuchtkörper zueinander kompensierbar.

Darüber hinaus werden in einer weiteren Druckschrift JP 2010 120604 A dekorative Elemente zur Fahrzeuginnenraumbeleuchtung offenbart, die als Zierteile bzw. Zierleisten beispielsweise in der Türverkleidung des Fahrzeuginnenraums eingebaut sind bzw. eingebaut werden können. Dabei werden als Lichtleiter Hohllichtleiter bzw. Lichtleiter in Form eines flachen Bandes offenbart, die in einer Umfassung geführt werden. Die Umfassung der Lichtleiter wird durch zwei Rippen gebildet, die beim Zusammenbau mittels eines Rasthakens oder durch Zusammenkleben der beiden Rippenteile zusammen gehalten werden. Dabei werden die Lichtleiter fest zwischen die beiden die Umfassung bildenden Rippen eingespannt. Zumindest eine der Rippen ist dabei zumindest teilweise durchsichtig ausgebildet, sodass das in dem Lichtleiter geführte Licht in den Fahrzeuginnenraum ausgestrahlt werden kann. Auch in diesem Fall ist wegen der festen Einspannung der Lichtleiter in die sie umgebende Umfassung eine relative Bewegung des Lichtleiters bezüglich seiner Umfassung nicht möglich. Dadurch können mechanische Spannungen, die aufgrund unterschiedlicher Ausdehnungskoeffizienten der Materialien auftreten, nicht oder nicht ausreichend aufgenommen werden. Demnach können auch nur leuchtende Zierleisten geringer Abmessungen realisiert mit einem einzelnen Lichtleiter werden.

In der US 2003/063888 A1 ist eine Haltevorrichtung für einen Lichtleiter beschreiben. Die Haltevorrichtung setzt sich zusammen aus einer Befestigungsrille und zwei Schenkeln, welche an der Befestigungsrille angeordnet sind und von dieser abstehen. Die Schenkel der Haltevorrichtung greifen ferner in eine Einspanneinrichtung ein.

Es ist Aufgabe der Erfindung, eine umlaufende Beleuchtungsvorrichtung für Fahrzeug-Komponenten vorzusehen, die es ermöglicht, auch großflächige Bauteile zu umlaufen.

Diese Aufgabe wird mit einer umlaufenden Beleuchtungsvorrichtung gelöst, welche die Merkmale des Patentanspruchs 1 aufweist, sowie einem damit versehenen Fahrzeug, welches die Merkmale des Patentanspruchs 9 aufweist.

Die erfindungsgemäße Beleuchtungsvorrichtung dient dem Einrahmen bzw. Umrahmen einer Fahrzeug-Komponente insbesondere mit großflächigen Abmessungen. Dazu wird eine umlaufende Beleuchtungsvorrichtung vorgesehen, die mindestens einen Lichtleiter und eine den mindestens einen Lichtleiter führende Umfassung vorsieht. Der Lichtleiter wird mittels eines Festlagers in der Umfassung an einer vorbestimmten Stelle fest gelagert. Dieses kann durch Kleben, Einschweißen oder ein mechanisches Einklemmen realisiert werden. Der zumindest eine Lichtleiter ist vom Festlager ausgehend in Längsrichtung seiner beiden Enden bezüglich der ihn umgebenden Umfassung beweglich gelagert. Zum einen erlaubt die feste Lagerung des Lichtleiters an die Umfassung eine genaue Positionierung des Lichtleiters in der Umfassung, zum anderen erlauben bewegliche Lager an den Enden des Lichtleiters diesem, sich relativ zu seiner umgebenden Umfassung auszudehnen bzw. zu bewegen. Ein großer Vorteil dieser Lagerung ist es, durch die Relativbewegungen eine unterschiedliche Ausdehnung des Lichtleiters in seiner ihn umgebenden Umfassung zu ermöglichen und dadurch die sonst auftretenden Temperaturspannungen aufgrund der unterschiedlichen Wärmeausdehnung zu kompensieren. Die Umfassung des Lichtleiters weist dabei einen geringeren Wärmeausdehnungskoeffizient als der Lichtleiter auf. Dadurch wird gewährleistet, dass die Enden der Lichtleiter nahe der sie umgreifenden Umfassung angeordnet werden können, ohne dass die eingekoppelten Lichtquellen von der Umfassung heruntergeschoben werden können. Dadurch wird Platz eingespart.

Die Positionierung des festen Lagers des Lichtleiters kann in der Umfassung derart gewählt werden, dass ein jeweiliger Lichtleiter-Abschnitt - wobei ein Lichtleiter-Abschnitt durch den Teil eines Lichtleiterendes zum festen Lager des Lichtleiters definiert ist - optimal eingebaut bzw. angeordnet werden kann. Auf diese Weise können konstruktive Einschränkungen der Bauteile berücksichtigt werden.

Ferner ist es erfindungsgemäß vorgesehen, dass die Beleuchtungsvorrichtung mehrere Lichtleiter umfasst, welche innerhalb der Umfassung aneinander gereiht angeordnet sind, wobei sich jeweilige Endabschnitte der Lichtleiter überlappen.

Bei einer bevorzugten Ausführungsform wird der Lichtleiter in der Mitte seiner Längsausrichtung fest in der Umfassung gelagert. Bei einem symmetrischen Bauteilabschnitt ist es besonders vorteilhaft, den ihn umsäumenden geraden Lichtleiter mittig fest in der Umfassung zu lagern. Damit kann eine gleichmäßige Ausdehnung beider Lichtleiter-Abschnitte in Längsrichtung des Lichtleiters gewährleistet werden.

Um den Herstellungsaufwand zu vermindern und ein gleichmäßiges Ausleuchten ohne auffallende Brüche in der Lichtführung zu gewährleisten, ist es zweckmäßig, die Umfassung des Lichtleiters einstückig auszubilden. Eine sichtbare Unterbrechung der Umfassung würde außerdem vom Betrachter als Bruch oder Defekt in der Beleuchtungsvorrichtung angesehen werden.

Die Umfassung kann in einer bevorzugten Ausführungsform zumindest teilweise transparent ausgebildet werden. Dies ist dann besonders vorteilhaft, wenn durch die beleuchteten Abschnitte die Aufmerksamkeit des Fahrgastes auf vorbestimmte Funktionen oder Teile des Fahrzeugs gerichtet werden soll. In einer Weiterbildung der Ausführungsform werden unterschiedlichen transparenten Beleuchtungsabschnitten auch unterschiedliche Farben zugeordnet. Dies ist dann besonders zweckmäßig, wenn eine Priorisierung oder Einteilung von Gegenständen oder Funktionen des Fahrzeugs unterschiedlichen Farben zugeordnet werden soll. Demnach können die Lichtleiter und/oder die dazugehörigen Lichtquellen in ihrer ausgestrahlten Farbe frei gewählt werden. In einer weiteren Ausführungsform kann die farbliche Gestaltung der Umfassung vorbestimmten Vorgaben genügen.

Es kann erforderlich sein, mehrere Lichtleiter innerhalb der Umfassung überlappend anzuordnen. Bei bevorzugten Ausführungsformen werden mehr als ein Lichtleiter durch die Umfassung geführt, so dass eine Mehrzahl von Lichtleitern mit unterschiedlichen LEDs bestückt werden können und damit unterschiedliche Farben realisiert werden können. Zusätzlich erhöhen mehrere Lichtleiter, die einander überlappend innerhalb derselben Umfassung angeordnet sind, die Ausfallsicherheit, da im Falle eines Defekts eines Lichtleiters ein weiterer dessen Funktion aufrecht erhält. Darüber hinaus erlaubt eine solche Anordnung auch komplexere Umrandungen von Fahrzeug-Komponenten. Das Verteilen mehrerer Lichtleiter in derselben Umfassung, wobei sich jeweilige Endabschnitte aneinandergereihter Lichtleiter überlappen, ermöglicht es, die Lichtleiter in ihren Längenabmessungen kurz zu gestalten. Dadurch wird die Wärmeausdehnung der einzelnen Lichtleiter reduziert und schließlich ermöglicht eine überlappende Anordnung der Lichtleiter in der Umfassung den Eindruck einer durchgehenden gleichmäßigen Lichtführung und Ausleuchtung.

Besonders förderlich ist es, wenn mehrere einander überlagernde Lichtleiter auch zueinander relativ beweglich angeordnet werden können. Die einzelnen Lichtleiter behindern einander dadurch in der Umfassung nicht bei ihrer Wärmeausdehnung und üben gegenseitig keine mechanischen Kraftwirkungen aufeinander aus. Eine solche Anordnung erhöht die Flexibilität hinsichtlich der zu verwendenden Materialien und Eigenschaften der umlaufenden Beleuchtungsvorrichtung erheblich.

Zweckgemäß empfiehlt es sich, den Lichtleiter und/oder seine Umfassung aus Polymethylmethacrylaten oder Polycarbonaten herzustellen. Solche Materialien sind im Gegensatz zum herkömmlichen Glas elastischer und erlauben somit auch größere Temperaturausdehnungen. Des Weiteren neigen sie im Falle mechanischer Beschädigung nicht zur Bildung von gefährlichen Splittern und gewährleisten somit ein niedrigeres Verletzungsrisiko der Fahrzeuginsassen. Ferner lassen sich solche Kunststoffe leicht verarbeiten, sind billig herzustellen und recyclebar.

Bei einer besonders bevorzugten Ausführungsform kann es erforderlich sein, zumindest ein Ende eines Lichtleiters und/oder eine dazugehörige Lichtquelle beweglich zu lagern. Je nach Ausführungsform ist es notwendig, die Lichtquellen, beispielsweise LEDs mit zugehörigen Einkoppelelementen mit dem Lichtleiter zu verbinden. Dieses würde folglich bedeuten, dass sich das Ende des Lichtleiters zusammen mit der an ihn gekoppelten Lichtquelle bewegen können muss. Somit kann es notwendig werden, dass nicht nur das Ende eines Lichtleiters beweglich gelagert werden muss, um eine relative Bewegung bezüglich seiner Umfassung zu erlauben, sondern auch eine bewegliche Lagerung der dazugehörigen Lichtquelle, die entweder fest mit dem Ende des Lichtleiters oder aber lose damit verbunden ist und ihrerseits eine relative Bewegung in Bezug auf das Ende des Lichtleiters zulässt. Selbstverständlich können den Anforderungen entsprechend lose und feste Lagerungen der Lichtquellen und jeweiligen Enden der Lichtleiter vorgesehen und kombiniert werden.

Ein Großteil der Fahrzeug-Komponenten weist die Form eines Vielecks auf. Zweckentsprechend wird eine Beleuchtungsvorrichtung für eine Fahrzeug-Komponente bevorzugt, die eine vieleckige Form aufweist.

Vorteilhafterweise werden Lichtleiter jeweils entlang eines geraden Abschnitts eines Vielecks angeordnet, um eine Beleuchtungsvorrichtung für eine Fahrzeug Komponente mit einer vieleckigen Kontur herzustellen. Dadurch, dass man den Lichtleiter nicht um ein Eck führen muss, ist auch die Gestaltung spitzer Winkel möglich. Auf diese Weise kann man Spannungsspitzen vermeiden, die sonst aufgrund der gekrümmten Anordnung bzw. mehrfachen festen Lagerung des Lichtleiters auftreten würden.

Besonders bevorzugt werden Kraftfahrzeuge mit der erfindungsgemäßen umlaufenden Beleuchtungsvorrichtung ausgestattet. Beispielsweise lässt sich ein rechteckiges Schiebedach und/oder ein Schiebedachausschnitt eines Fahrzeughimmels mit einer derartigen Beleuchtungsvorrichtung unproblematisch herstellen und einbauen, da eine erfindungsgemäße Ausführung der umlaufenden Beleuchtungsvorrichtung im Falle einstückig hergestellter Fahrzeug-Komponenten besonders zweckvoll ist. Die Enden der Lichtleiter bzw. deren Lichtquellen und zugehörigen Einkoppelelemente können im Allgemeinen bequem in dem Schiebedach oder Fahrzeughimmel untergebracht werden.

Besonders effizient ist es, die umlaufende Beleuchtungsvorrichtung eines rechteckigen Schiebedaches mittels vier Lichtleiter auszuführen. Dazu wird jeweils ein Lichtleiter einer geraden Seite des Rechtecks zugeordnet, wobei der Lichtleiter auf halber Strecke der jeweiligen Rechteckseite entlang der Umfassung fest gelagert wird, wobei die beiden sich in Längsrichtung erstreckenden Enden des Lichtleiters - zusammen mit deren Lichtquelle und deren Einkoppelelementen - außerhalb des Rechtecks im Fahrzeughimmel schwimmend gelagert werden. Die einzelnen Lichtleiter werden demnach im Bereich eines Rahmens des rechteckigen Schiebedachs in den angrenzenden Fahrzeughimmel geführt. An den Ecken des umlaufenden Beleuchtungssystems wird somit ein Bruch in der beleuchteten Umrandung vermieden und dem Fahrzeuginsassen der Eindruck einer umlaufenden und gleichmäßig ausgeleuchteten Umrandung vermittelt.

Im Folgenden wird die Erfindung und ihre Ausführungsformen anhand von Zeichnungen näher erläutert. Es zeigen:
Figur 1: eine skizzenhafte Draufsicht eines Schiebedachausschnitts gemäß einer Ausführungsform der Erfindung und
Figur 2: eine detaillierte Schnittansicht gemäß Schnitt A-A aus Figur 1 einer Umfassung eines Lichtleiters in einem Schiebedachausschnitt eines Fahrzeughimmels gemäß einer Ausführungsform der Erfindung.

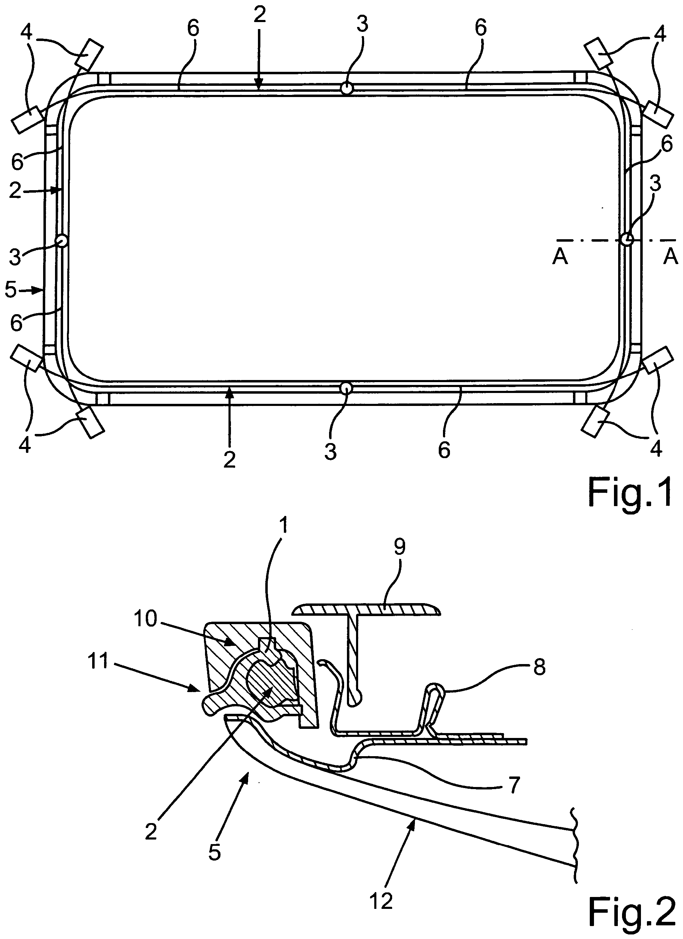

In Figur 1 wird in einer skizzenhaften Draufsicht eine umlaufende Beleuchtungsvorrichtung in einem Dachausschnitt 5 für ein Schiebedach in einem Fahrzeughimmel dargestellt. Dabei erstreckt sich entlang von vier Seiten des rechteckigen Dachausschnitts 5 eine Umfassung 1, die hier vier konventionelle Lichtleiter 2 in ihrem Inneren aufnimmt. Dabei ist die Umfassung 1 nicht auf vier Lichtleiter allein beschränkt. Die Umfassung kann weitere Lichtleiter 2, die einander überlappen und parallel zueinander oder einander kreuzend angeordnet sind, aufnehmen (nicht gezeigt). An jeweils einer Seite der rechteckförmigen Umfassung 1 ist ein Lichtleiter 2 über ein Festlager 3 darin befestigt. Das Festlager 3 zentriert den Lichtleiter 1 mittig und formschlüssig innerhalb der Umfassung 1. Vom Festlager 3 ausgehend erstreckt sich der Lichtleiter 2 in Längsrichtung seiner beiden Enden lose in der Umfassung 1.

Ein Teilstück von einem Lichtleiterende zum Festlager 3 des Lichtleiters 2 definiert einen Lichtleiter-Abschnitt 6. Durch eine Anordnung des Festlagers 3 des Lichtleiters 2 können die Beträge der Wärmeausdehnung der einzelnen Lichtleiter-Abschnitte 6 genau festgelegt werden. Auf diese Weise wird ein zur Verfügung stehender Einbauraum der LEDs optimal genutzt. Dabei führen die jeweiligen Enden des Lichtleiters 2 bzw. des Lichtleiter-Abschnitts 6 über den Rand der Umfassung 1 hinaus in ein LED-Einkoppelelement, welches einer LED-Lichtquelle 4 zugeordnet ist. Die an den Enden des Lichtleiters 2 befestigten Lichtquellen 4 sind lose/schwimmend im Himmel 5 eines Fahrzeugs gelagert - können allerdings auch fest gelagert werden (nicht gezeigt). Eine solche Anordnung hat die Funktion eines ausgleichenden Loslagers, die die unterschiedlichen Wärmeausdehnungen der Umfassung 1 und der darin aufgenommenen Lichtleiter 2 ermöglicht.

Bei der Konfiguration der umlaufenden Beleuchtungsvorrichtung gemäß der Erfindung werden für die Umfassung 1 solche Materiale bevorzugt, die im Vergleich zu den konventionellen Lichtleitern 2 einen geringeren Wärmeausdehnungskoeffizienten aufweisen. Auf diese Weise wird sichergestellt, dass die Wärmeausdehnung des Lichtleiters 2 immer stärker ist als die seiner Umfassung 1 und dass die einkoppelnden Lichtquellen 4 nicht von den Enden des Lichtleiters 2 "abgestreift" werden können. Sofern der Wärmeausdehnungskoeffizient der Umfassung 1 höher als der der Lichtleiter 2 ist, muss gewährleistet werden, dass genügend Spielraum zwischen dem Rand der Umfassung 1 und der an dem Ende des Lichtleiters 2 befestigten Lichtquelle 4 vorhanden ist. Bei der in der Figur 1 dargestellten umlaufenden Beleuchtungsvorrichtung werden die Enden des Lichtleiters 2 an den Ecken des Beleuchtungssystems in den Fahrzeughimmel geführt.

Die Lichtleiter sind aus einem herkömmlichen, lichtleitenden Material hergestellt. Die Umfassung 1 wird vornehmlich auch aus einem lichtdurchlässigen Material hergestellt, das vorzugsweise aus herkömmlichen Polymethylmethacrylat- oder Polycarbonat-Scheiben hergestellt ist. Zur Erzeugung einer gleichmäßig erscheinenden Beleuchtungsvorrichtung kann die Umfassung 1 in einer speziellen Ausführungsform eine zum Fahrgastraum orientierte und darin sichtbare Streuscheibe 11 aufweisen.

In Figur 2 ist in einem skizzenhaften Schnitt A-A aus Figur 1 eine Detaillösung zur Befestigung der umlaufenden Beleuchtung von einem Dachausschnitt 5 in einem Fahrzeughimmel wiedergegeben. Der Dachausschnitt 5 im Fahrzeughimmel weist unterhalb eines Fahrzeugdachs ein Verbindungselement 9 und zwei Haltebleche 7, 8 auf, zwischen die die umlaufende Beleuchtungsvorrichtung eingespannt ist. Dabei wird ein von einer Umfassung 1 umgebener Lichtleiter 2 in einer Kronenleiste 10 aufgenommen. Die Kronenleiste 10 dient zur Abdichtung der umlaufenden Beleuchtung nach außen hin. Die Kronenleiste 10 wird zusammen mit der in ihr gefassten Umfassung 1 in den zwei Halteblechen 7, 8 eingespannt. Für den Fahrzeuginsassen ist im Innenraum lediglich eine Streuscheibe 11 der umlaufenden Beleuchtungsvorrichtung sichtbar, wobei die Streuscheibe 11 zwischen Umfassung 1 und Fahrgastraum angeordnet ist und mit der Umfassung 1 einteilig gebildet sein kann. Ein Halteblech 7 des Fahrzeughimmels ist auf der dem Fahrzeuginsassen zugewandten Seite mit Dekorstoff 12 versehen. Bis auf die Streuscheibe 11 ist die gesamte umlaufende Beleuchtungsvorrichtung von dem Fahrzeughimmel bedeckt. Abgesehen von dem Abdichten der Beleuchtungsvorrichtung mittels der elastischen Kronenleiste 10 nach außen, dient diese auch als Dämpfung bei starken Erschütterungen des Fahrzeugs, die die umlaufende Beleuchtungsvorrichtung beschädigen könnte. Mittels des Festlagers 3 wird der Lichtleiter 2 in der Umfassung 1 fest verankert und legt damit Richtung und Betrag der Ausdehnung des Lichtleiter-Abschnitts 6 eines Lichtleiters 2 fest.

## Patentansprüche

1. Umlaufende Beleuchtungsvorrichtung für eine Fahrzeug-Komponente mit
mindestens einem Lichtleiter (2) und
einer den mindestens einen Lichtleiter (2) führenden Umfassung (1) **dadurch gekennzeichnet, dass**
der mindestens eine Lichtleiter (2) mittels eines Festlagers (3) in der Umfassung (1) an einer vorbestimmten Stelle derart fest gelagert ist, dass der mindestens eine Lichtleiter (2) vom Festlager (3) ausgehend in Längsrichtung seiner beiden Enden relativ zu der Umfassung (1) beweglich gelagert ist,
wobei die Umfassung (1) des Lichtleiters (2) einen geringeren Wärmeausdehnungskoeffizienten als den des mindestens einen Lichtleiters (2) aufweist, wobei
die Beleuchtungsvorrichtung mehrere Lichtleiter (2) umfasst, welche innerhalb der Umfassung (1) aneinandergereiht angeordnet sind, wobei sich jeweilige Endabschnitte der Lichtleiter (2) überlappen.

2. Beleuchtungsvorrichtung nach Anspruch 1,
**dadurch gekennzeichnet, dass**
die vorbestimmte Stelle des mindestens einen Lichtleiters (2) in der Mitte seiner Längsausdehnung liegt.

3. Beleuchtungsvorrichtung nach Anspruch 1 oder 2,
**dadurch gekennzeichnet, dass**
die Umfassung (1) einstückig ausgebildet ist.

4. Beleuchtungsvorrichtung nach einem oder mehreren der Ansprüche 1 bis 3,
**dadurch gekennzeichnet, dass**
die Umfassung (1) zumindest teilweise transparent ausgebildet ist.

5. Beleuchtungsvorrichtung nach einem oder mehreren der Ansprüche 1 bis 4,
**dadurch gekennzeichnet, dass**
der mindestens eine Lichtleiter (2) Licht einer vorbestimmten Farbe abstrahlt und zumindest ein weiterer Lichtleiter (2) Licht einer Farbe abstrahlt, die sich von der Farbe des mindestens einen Lichtleiters (2) unterscheidet.

6. Beleuchtungsvorrichtung nach einem oder mehreren der Ansprüche 1 bis 5,
**dadurch gekennzeichnet, dass**
mehrere Lichtleiter (2) einander überlappend angeordnet sind.

7. Beleuchtungsvorrichtung nach einem oder mehreren der Ansprüche 1 bis 6,
**dadurch gekennzeichnet, dass**
der mindestens eine Lichtleiter (2) aus Polymethylmethacrylat oder Polycarbonat hergestellt ist.

8. Beleuchtungsvorrichtung nach einem oder mehreren der Ansprüche 1 bis 7,
**dadurch gekennzeichnet, dass**
an jedem der Enden des mindestens einen Lichtleiters (2) eine Lichtquelle (4) befestigt ist.

9. Fahrzeug mit einer umlaufenden Beleuchtungsvorrichtung für eine Fahrzeug-Komponente nach einem oder mehreren der Ansprüche 1 bis 8,
**dadurch gekennzeichnet, dass**
die Fahrzeug-Komponente eine vieleckige Form aufweist.

10. Fahrzeug nach Anspruch 9,
**dadurch gekennzeichnet, dass**
der mindestens eine Lichtleiter (2) entlang eines geraden Abschnitts der vieleckigen Form der Fahrzeug-Komponente angeordnet ist.

11. Fahrzeug nach Anspruch 9 oder 10,
**dadurch gekennzeichnet, dass**
die Fahrzeug-Komponente ein rechteckiges Schiebedach oder ein Schiebedachausschnitt (5) eines Fahrzeughimmels ist.

12. Fahrzeug nach Anspruch 11,
**dadurch gekennzeichnet, dass**
die umlaufende Beleuchtungsvorrichtung vier Lichtleiter (2) umfasst.

## Claims

1. Peripheral illumination device for a vehicle component, having
at least one light guide (2) and
an enclosure (1) which guides the at least one light guide (2),
**characterised in that** the at least one light guide (2) is securely supported by means of a fixed bearing (3) in the enclosure (1) at a predetermined location in such a manner that the at least one light guide (2) is movably supported relative to the enclosure (1) from the fixed bearing (3) in the longitudinal direction of the two ends thereof,
wherein the enclosure (1) of the light guide (2) has a lower thermal expansion coefficient than that of the at least one light guide (2), wherein
the illumination device comprises a plurality of light guides (2) which are arranged in a row inside the enclosure (1), wherein respective end portions of the light guides (2) overlap each other.

2. Illumination device according to Claim 1,
**characterised in that**
the predetermined location of the at least one light guide (2) is located at the centre of the longitudinal extent thereof.

3. Illumination device according to Claim 1 or 2,
**characterised in that**
the enclosure (1) is constructed in an integral manner.

4. Illumination device according to one or more of Claims 1 to 3,
**characterised in that**
the enclosure (1) is constructed so as to be at least partially transparent.

5. Illumination device according to one or more of Claims 1 to 4,
**characterised in that**
the at least one light guide (2) radiates light of a predetermined colour and at least one additional light guide (2) radiates light of a colour which differs from the colour of the at least one light guide (2).

6. Illumination device according to one or more of Claims 1 to 5,
**characterised in that**
a plurality of light guides (2) are arranged so as to overlap each other.

7. Illumination device according to one or more of Claims 1 to 6,
**characterised in that**
the at least one light guide (2) is produced from polymethyl methacrylate or polycarbonate.

8. Illumination device according to one or more of Claims 1 to 7,
**characterised in that**
a light source (4) is secured to each of the ends of the at least one light guide (2).

9. Vehicle having a peripheral illumination device for a vehicle component according to one or more of Claims 1 to 8,
**characterised in that**
the vehicle component has a polygonal shape.

10. Vehicle according to Claim 9,
**characterised in that**
the at least one light guide (2) is arranged along a straight portion of the polygonal shape of the vehicle component.

11. Vehicle according to Claim 9 or 10,
**characterised in that**
the vehicle component is a rectangular sliding roof or a sliding roof cut-out (5) of a vehicle roof.

12. Vehicle according to Claim 11,
**characterised in that**
the peripheral illumination device comprises four light guides (2).

## Revendications

1. Dispositif d'éclairage périphérique pour un composant de véhicule, avec
- au moins un guide de lumière (2) et
- une enveloppe (1) guidant l'au moins un guide de lumière (2),
**caractérisé en ce que** l'au moins un guide de lumière (2) est logé de manière fixe, au moyen d'un palier fixe (3), dans l'enveloppe (1) à un certain emplacement de telle sorte que l'au moins un guide de lumière (2) est logé mobile par rapport à l'enveloppe (1) en partant du palier fixe (3) dans le sens de la longueur de des deux extrémités,
l'enveloppe (1) du guide de lumière (2) ayant un plus petit coefficient de dilatation thermique que l'au moins un guide de lumière (2),
le dispositif d'éclairage comprenant plusieurs guides de lumière (2) qui sont agencés à la suite les uns des autres à l'intérieur de l'enveloppe (1), des tronçons terminaux respectifs des guides de lumière (2) se chevauchant.

2. Dispositif d'éclairage selon la revendication 1, **caractérisé en ce que** l'emplacement prédéterminé de l'au moins un guide de lumière (2) se trouve au milieu de son extension longitudinale.

3. Dispositif d'éclairage selon la revendication 1 ou 2, **caractérisé en ce que** l'enveloppe (1) est conçue d'une seule pièce.

4. Dispositif d'éclairage selon une ou plusieurs des revendications 1 à 3, **caractérisé en ce que** l'enveloppe (1) est conçue au moins partiellement transparente.

5. Dispositif d'éclairage selon une ou plusieurs des revendications 1 à 4, **caractérisé en ce que** l'au moins un guide de lumière (2) diffuse de la lumière d'une couleur prédéterminée et au moins un autre guide de lumière (2) diffuse de la lumière d'une couleur qui est différente de la couleur de l'au moins un guide de lumière (2).

6. Dispositif d'éclairage selon une ou plusieurs des revendications 1 à 5, **caractérisé en ce que** plusieurs guides de lumière (2) sont agencés de manière à se chevaucher les uns les autres.

7. Dispositif d'éclairage selon une ou plusieurs des revendications 1 à 6, **caractérisé en ce que** l'au moins un guide de lumière (2) est fabriqué en polyméthacrylate de méthyle ou en polycarbonate.

8. Dispositif d'éclairage selon une ou plusieurs des revendications 1 à 7, **caractérisé en ce qu'**une source de lumière (4) est fixée à chacune des extrémités de l'au moins un guide de lumière (2).

9. Véhicule avec un dispositif d'éclairage périphérique pour un composant de véhicule selon une ou plusieurs des revendications 1 à 8, **caractérisé en ce que** le composant de véhicule a une forme polygonale.

10. Véhicule selon la revendication 9, **caractérisé en ce que** l'au moins un guide de lumière (2) est agencé le long d'un tronçon droit de la forme polygonale du composant de véhicule.

11. Véhicule selon la revendication 9 ou 10, **caractérisé en ce que** le composant de véhicule est un toit ouvrant rectangulaire ou une partie formant toit ouvrant (5) d'un plafond de véhicule.

12. Véhicule selon la revendication 11, **caractérisé en ce que** le dispositif d'éclairage périphérique comprend quatre guides de lumière (2).
